# FASCICULE DE BREVET EUROPEEN

(11) **EP 4 306 426 B1**
(45) Date de publication et mention de la délivrance du brevet: **19.03.2025**
(21) Numéro de dépôt: 23183230.4
(22) Date de dépôt: 04.07.2023
(51) Int. Cl.: B64D 27/24, B64D 35/08, B64D 27/40

(54) **ENSEMBLE DE PROPULSION ÉLECTRIQUE COMPORTANT AU MOINS UN MOTEUR ÉLECTRIQUE POSITIONNÉ À L'AVANT D'UN SYSTÈME DE TRANSMISSION, AÉRONEF COMPORTANT AU MOINS UN TEL ENSEMBLE DE PROPULSION**
ELEKTRISCHE ANTRIEBSANORDNUNG MIT MINDESTENS EINEM ELEKTROMOTOR, DER AN DER FRONT EINES ÜBERTRAGUNGSSYSTEMS POSITIONIERT IST, LUFTFAHRZEUG, DAS MINDESTENS EINE SOLCHE ANTRIEBSANORDNUNG UMFASST
ELECTRIC PROPULSION ASSEMBLY COMPRISING AT LEAST ONE ELECTRIC MOTOR POSITIONED IN FRONT OF A TRANSMISSION SYSTEM, AIRCRAFT COMPRISING AT LEAST ONE SUCH PROPULSION ASSEMBLY

(30) Priorité: 13.07.2022 FR 2207185
(43) Date de publication de la demande: 17.01.2024
(73) Titulaire: Airbus SAS, 31700 Blagnac (FR); AIRBUS OPERATIONS (S.A.S.), 31060 Toulouse (FR)
(72) Inventeur: AMARGIER, Rémi, 31060 TOULOUSE (FR); VINCHES, Frédéric, 31060 TOULOUSE (FR); ALLIAS, Jean-François, 31060 TOULOUSE (FR); ROUX, Anthony, 31060 TOULOUSE (FR); SIMIONATO NETO, Norberto, 82024 TAUFKIRCHEN (DE); FUKASAKU, Kotaro, 31060 TOULOUSE (FR)
(74) Mandataire: Fantin, Laurent

(56) Documents cités:
- WO-A1-2020/079792
- WO-A1-2022/101094
- US-A1- 2013 231 208
- US-A1- 2021 371 120

## Description

La présente demande se rapporte à un ensemble de propulsion électrique comportant au moins un moteur électrique positionné à l'avant d'un système de transmission ainsi qu'à un aéronef comportant au moins un tel ensemble de propulsion.

Selon un mode de réalisation visible sur la figure 1, un aéronef 10 comprend un fuselage 12, au moins une voilure 14 reliée au fuselage 12 ainsi que des ensembles de propulsion 16 reliés à la voilure 14 et disposés de part et d'autre du fuselage 12. Comme illustré sur les figures 2 et 3, chaque ensemble de propulsion 16 comprend une hélice 18 qui présente un axe de rotation A18.

Pour la suite de la description, une direction longitudinale X est parallèle à l'axe de rotation A18 de l'hélice 18. Un plan longitudinal contient l'axe de rotation A18. Un plan transversal est perpendiculaire à la direction longitudinale X. Une direction transversale horizontale Y est perpendiculaire à la direction longitudinale X et orientée horizontalement. Une direction transversale verticale Z est perpendiculaire à la direction longitudinale X et orientée verticalement. Les notions « avant » et « arrière » font référence au sens d'écoulement de l'air par rapport à l'aéronef en vol, l'air s'écoulant de l'avant vers l'arrière.

Dans le cas d'un ensemble de propulsion électrique, ce dernier comprend plusieurs moteurs électriques 20, un système de transmission 22, comme une boîte de vitesse par exemple, configuré pour accoupler les moteurs électriques 20 à l'hélice 18 ainsi qu'un système de réglage du pas d'hélice 24 présentant un axe de commande 24.1 relié à l'hélice 18.

L'ensemble de propulsion 16 comprend une structure d'attache 26 reliant le système de transmission 22 à une structure support de l'aéronef 10, comme la structure de la voilure par exemple.

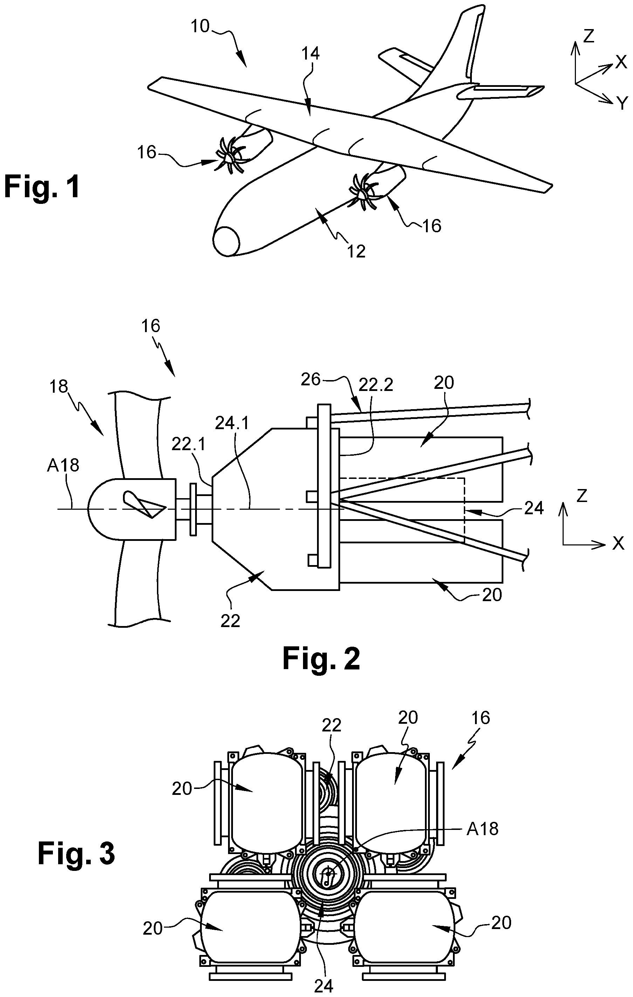

Selon un agencement visible sur les figures 2 et 3, le système de transmission 22 présente une première surface transversale 22.1, orientée vers l'avant, sur laquelle est rapporté un arbre d'entrainement de l'hélice 18 ainsi qu'une deuxième surface transversale 22.2, orientée vers l'arrière, sur laquelle sont rapportés les moteurs électriques 20 et le système de réglage du pas d'hélice 24.

L'axe de commande 24.1 du système de réglage du pas d'hélice 24 étant positionné dans le prolongement de l'axe de rotation A18 de l'hélice 18, ce système de réglage du pas d'hélice 24 est positionné au centre de la deuxième surface transversale 22.2 et les moteurs électriques 20 sont agencés tout autour du système de réglage du pas d'hélice 24.

Même si cet agencement permet d'obtenir un ensemble compact, il n'est pas pleinement satisfaisant car le système de réglage du pas d'hélice 24 est difficilement accessible.

Le document US2021/371120 décrit un mode de réalisation sensiblement proche. Selon ce document, un ensemble de propulsion d'un aéronef comprend une hélice qui présente un axe de rotation, plusieurs moteurs électriques, un système de transmission configuré pour accoupler les moteurs électriques à l'hélice. Ce système de transmission comprend un arbre de sortie relié à l'hélice ainsi qu'un système de réglage du pas d'hélice et délimite une zone avant dans laquelle est positionnée l'hélice ainsi qu'une zone arrière opposée à la zone avant, dans laquelle est positionné le système de réglage du pas d'hélice. Selon ce document, les moteurs et le système de réglage du pas d'hélice sont alignés les uns derrière les autres, ce qui ne permet pas d'obtenir un ensemble compact.

La présente invention vise à remédier à tout ou partie des inconvénients de l'art antérieur. A cet effet, l'invention a pour objet un ensemble de propulsion d'un aéronef comprenant une hélice qui présente un axe de rotation, plusieurs moteurs électriques, un système de transmission configuré pour accoupler les moteurs électriques à l'hélice et comportant un arbre de sortie relié à l'hélice ainsi qu'un système de réglage du pas d'hélice, le système de transmission délimitant une zone avant dans laquelle est positionnée l'hélice ainsi qu'une zone arrière opposée à la zone avant, le système de réglage du pas d'hélice étant positionné dans la zone arrière.

Selon l'invention, au moins un des moteurs électriques est positionné dans la zone avant. En complément, l'ensemble de propulsion comprend une structure de connexion intercalée entre l'hélice et le système de transmission, la structure de connexion et l'arbre de sortie du système de transmission relié à l'hélice étant configurés de manière à ce qu'aucun moteur électrique positionné dans la zone avant n'interfère avec l'hélice.

Ainsi, le système de réglage du pas d'hélice positionné à l'arrière du système de transmission n'est plus entouré de moteurs électriques, l'un d'entre eux étant situé dans la zone avant. Cet agencement améliore l'accessibilité du système de réglage du pas d'hélice, notamment lors de sa maintenance.

Selon une autre caractéristique, l'ensemble de propulsion comprend un système de guidage intercalé entre la structure de connexion et l'arbre de sortie du système de transmission relié à l'hélice.

Selon une autre caractéristique, la structure de connexion comprend un tube s'étendant entre des première et deuxième extrémités, la première extrémité étant reliée au système de transmission.

Selon une autre caractéristique, l'ensemble de propulsion comprend au moins une structure d'attache configurée pour relier l'ensemble de propulsion à une structure support d'un aéronef, comportant au moins un premier point de fixation positionné dans un premier plan ainsi qu'au moins un deuxième point de fixation positionné dans un deuxième plan décalé selon une direction parallèle à l'axe de rotation par rapport au premier plan, les premier et deuxième points de fixation étant positionnés sur le système de transmission et/ou la structure de connexion.

Selon une autre caractéristique, les premier et deuxième plans sont positionnés au droit de la structure de connexion, le premier plan étant situé au droit de la première extrémité du tube, le deuxième plan étant situé au droit de la deuxième extrémité du tube.

Selon une autre caractéristique, la structure d'attache comprend un cadre positionné dans un plan transversal, plusieurs bielles obliques présentant une première extrémité reliée par une première liaison au cadre et une deuxième extrémité reliée par une deuxième liaison à un des deuxièmes points de fixation situés au niveau de la deuxième extrémité du tube de la structure de connexion ainsi qu'au moins deux bielles transversales reliant chacune le cadre à au moins un premier point de fixation situé au niveau de la première extrémité du tube de la structure de connexion.

Selon une autre caractéristique, chaque bielle oblique présente une orientation. En complément, pour chaque bielle oblique, chacune des première et deuxième liaisons comprend une articulation présentant un axe de pivotement positionné dans un plan transversal et sensiblement perpendiculaire à l'orientation de la bielle oblique correspondante.

Selon une autre caractéristique, la structure d'attache comprend :
- deux bielles transversales positionnées de part et d'autre d'un plan vertical passant par l'axe de rotation,
- pour chaque bielle transversale, au moins une première articulation reliant la bielle transversale et le cadre, ainsi qu'au moins une deuxième articulation reliant la bielle transversale et la structure de connexion,
- chacune des première et deuxième articulations présentant un axe de pivotement sensiblement parallèle à l'axe de rotation.

Selon une autre caractéristique, la structure de connexion comprend une platine, positionnée au niveau de la première extrémité du tube, qui présente dans un plan transversal une forme approximativement triangulaire avec des premier, deuxième et troisième sommets arrondis, le tube étant positionné à proximité du premier sommet, les deuxième et troisième sommets étant reliés par un côté opposé au premier sommet sensiblement horizontal, situé au-dessus du tube et à proximité du cadre, les bielles transversales étant reliées à la platine au niveau des deuxième et troisième sommets arrondis.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue schématique latérale d'un ensemble de propulsion électrique illustrant un mode de réalisation de l'art,
- La figure 3 est une vue schématique arrière de l'ensemble de propulsion électrique visible sur la figure 2,

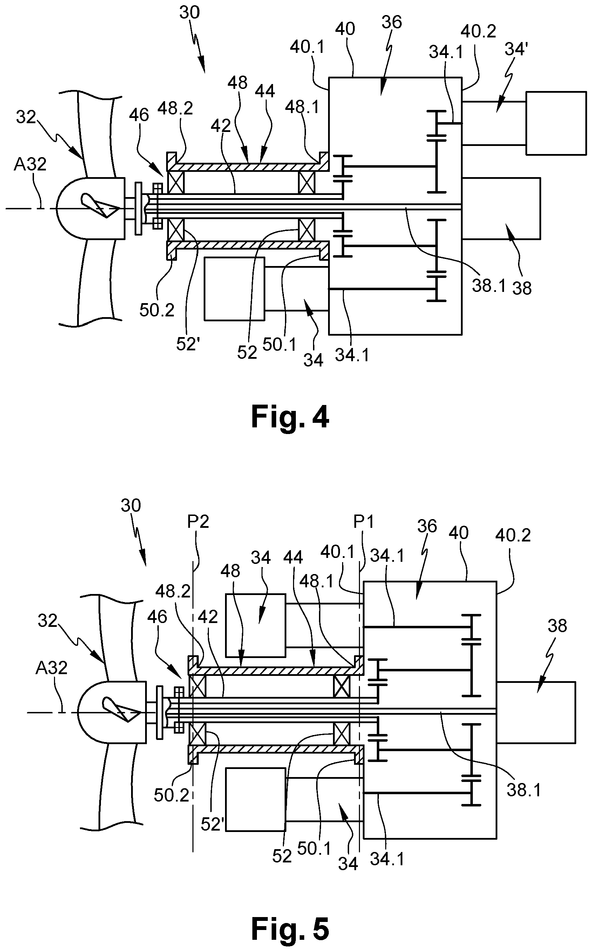

- La figure 4 est une vue schématique latérale d'un ensemble de propulsion électrique illustrant un premier mode de réalisation de l'invention,
- La figure 5 est une vue schématique latérale d'un ensemble de propulsion électrique illustrant un deuxième mode de réalisation de l'invention,

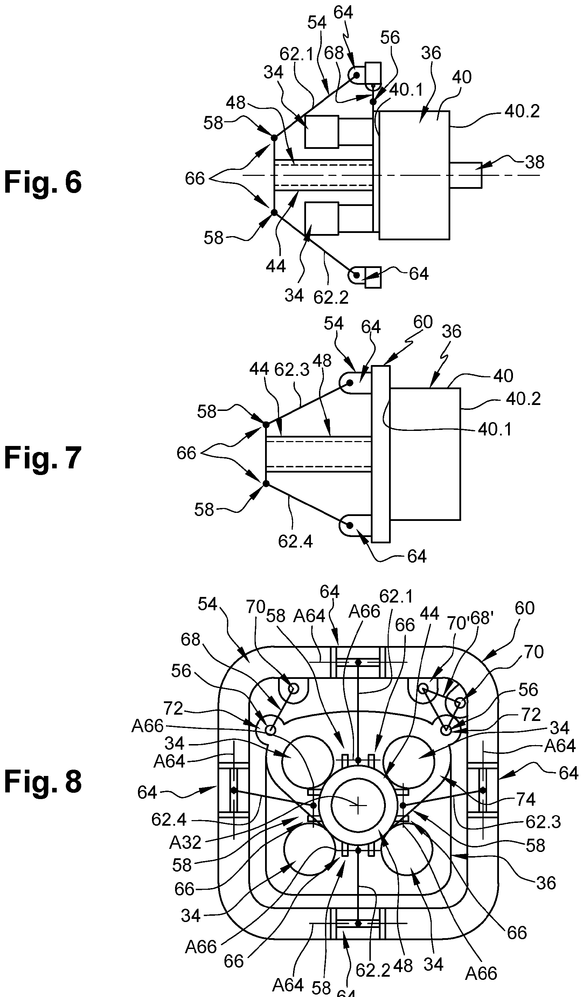

- La figure 6 est une vue schématique latérale d'une partie d'un ensemble de propulsion électrique et de sa structure d'attache illustrant un mode de réalisation de l'invention,
- La figure 7 est une vue schématique de dessus de la partie de l'ensemble de propulsion électrique visible sur la figure 6,
- La figure 8 est une vue schématique de face de la partie de l'ensemble de propulsion électrique visible sur la figure 6,

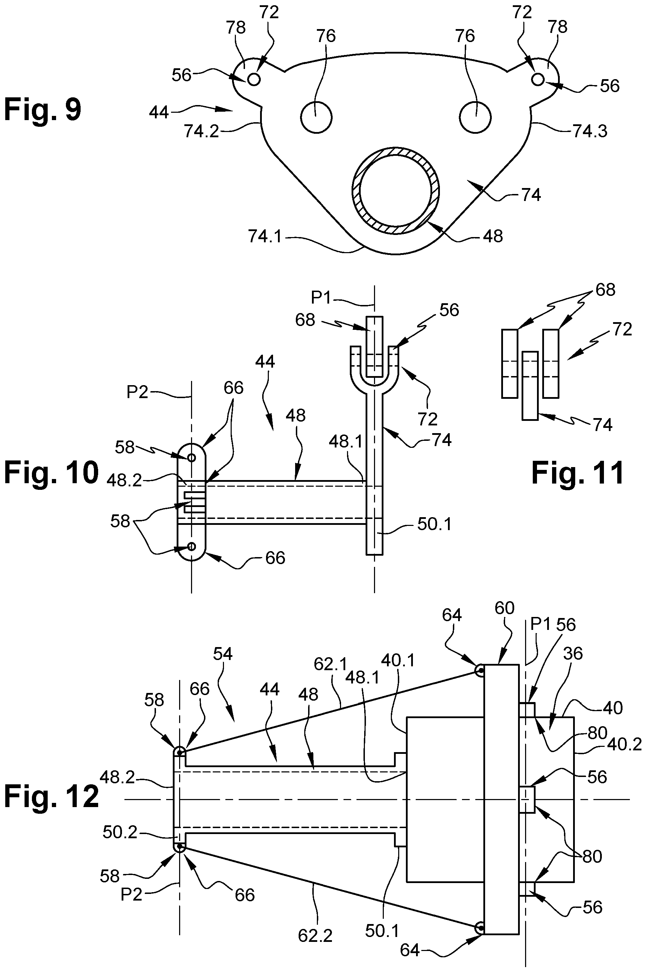

- La figure 9 est une vue de face d'une platine d'une structure de connexion illustrant un mode de réalisation de l'invention,
- La figure 10 est une vue latérale d'une structure de connexion illustrant un premier mode de réalisation de l'invention,
- La figure 11 est une vue latérale d'une partie d'une structure de connexion illustrant un deuxième mode de réalisation, et
- La figure 12 est une vue schématique latérale d'une partie d'un ensemble de propulsion électrique et de sa structure d'attache illustrant un autre mode de réalisation de l'invention.

Selon des modes de réalisation visibles sur les figures 4 et 5, un ensemble de propulsion 30 de type électrique comprend une hélice 32 qui présente un axe de rotation A32, plusieurs moteurs électriques 34, un système de transmission 36, comme une boîte de vitesse par exemple, configuré pour accoupler les moteurs électriques 34 à l'hélice 32 ainsi qu'un système de réglage du pas d'hélice 38. Selon une application, au moins un tel ensemble de propulsion 30 est destiné à équiper un aéronef.

Le système de transmission 36 délimite une zone avant, positionnée à l'avant du système de transmission 36, dans laquelle est positionnée l'hélice 32 ainsi qu'une zone arrière, opposée à la zone avant, positionnée à l'arrière du système de transmission 36. Selon un mode de réalisation, le système de transmission 36 comprend un boîtier 40 qui présente une première surface transversale 40.1, orientée vers la zone avant, ainsi qu'une deuxième surface transversale 40.2, orientée vers la zone arrière. Le système de transmission 36 comprend également un arbre de sortie 42 creux relié à l'hélice 32, en saillie par rapport à la première surface transversale 40.1.

Chaque moteur électrique 34 comprend un arbre de sortie 34.1 relié au système de transmission 36.

Le système de réglage du pas d'hélice 38 est positionné dans la zone arrière sur la deuxième surface transversale 40.2 du système de transmission 36 et comprend un axe de commande 38.1 relié à l'hélice 32, traversant le système de transmission 36 et logé dans l'arbre de sortie 42 du système de transmission 36.

Le système de réglage du pas d'hélice 38 est relié par tout moyen approprié au système de transmission 36. Il n'est pas plus décrit car il peut être identique à ceux de l'art antérieur.

Au moins un des moteurs électriques 34 est positionné entre le système de transmission 36 et l'hélice 32. Selon cet agencement, chaque moteur électrique 34, positionné dans la zone avant, est fixé sur la première surface transversale 40.1 du système de transmission 36. En complément, cette première surface transversale 40.1 présente un orifice traversant pour l'arbre de sortie 42 du système de transmission 36 ainsi qu'un orifice traversant pour l'arbre de sortie 34.1 de chaque moteur électrique 34 positionné dans la zone avant.

Selon un mode de réalisation visible sur la figure 4, au moins un moteur électrique 34 est positionné dans la zone avant et au moins un moteur électrique 34' est positionné dans la zone arrière.

Selon un mode de réalisation visible sur la figure 5, tous les moteurs électriques 34 sont positionnés dans la zone avant. Seul le système de réglage du pas d'hélice 38 est positionné sur la deuxième surface transversale 40.2 du système de transmission 36, dans la zone arrière. Selon un premier agencement visible sur la figure 4, les moteurs électriques 34 positionnés dans la zone avant sont décalés par rapport au(x) moteur(s) électrique(s) 34' positionné(s) dans la zone arrière. Selon un deuxième agencement, l'ensemble de propulsion 30 comprend un moteur électrique situé dans la zone arrière qui présente un arbre de sortie 34.1 aligné avec l'arbre de sortie 34.1 d'un moteur électrique 34 situé dans la zone avant. Cet agencement permet de simplifier l'architecture du système de transmission 36, en mutualisant certains éléments du système de transmission 36 aux deux moteurs électriques disposés face à face, de part et d'autre du système de transmission 36.

Quel que soit le mode de réalisation, le système de réglage du pas d'hélice 38 n'est pas entouré de moteurs électriques ce qui se traduit par une meilleure accessibilité.

L'ensemble de propulsion 30 comprend une structure de connexion 44 positionnée dans la zone avant et intercalée entre l'hélice 32 et le système de transmission 36. Selon une configuration, l'ensemble de propulsion électrique comprend un système de guidage 46 intercalé entre la structure de connexion 44 et l'arbre de sortie 42 du système de transmission 36 relié à l'hélice 20.

La structure de connexion 44 et l'arbre de sortie 42 du système de transmission 36 présentent chacun une longueur (dimension mesurée parallèlement à la direction longitudinale) telle qu'aucun moteur électrique 34 positionné dans la zone avant n'interfère avec l'hélice 32.

Selon un mode de réalisation, la structure de connexion 44 est creuse et comprend un tube 48 qui s'étend entre des première et deuxième extrémités 48.1, 48.2, la première extrémité 48.1 du tube 48 étant reliée par des éléments de fixation au boîtier 40 du système de transmission 36. Selon une configuration, la structure de connexion 44 comprend des première et deuxième collerettes 50.1, 50.2 aux première et deuxième extrémités du tube 48, la première collerette 50.1 permettant de relier le tube 48 au système de transmission 36. Bien entendu, l'invention n'est pas limitée à ce mode de réalisation pour la structure de connexion 44.

Selon un mode de réalisation, le système de guidage 46 comprend deux roulements 52, 52' intercalés entre le tube 48 de la structure de connexion 44 et l'arbre de sortie 42 du système de transmission 36 relié à l'hélice 20, positionnés proches de chacune des extrémités 48.1, 48.2 du tube 48. Bien entendu, l'invention n'est pas limitée à ce mode de réalisation pour le système de guidage 46.

L'ensemble de propulsion 30 comprend au moins une structure d'attache 54 configurée pour relier l'ensemble de propulsion 30 à une structure support d'un aéronef, comme la structure d'une voilure par exemple.

La structure d'attache 54 comprend au moins un premier point de fixation 56 positionné dans un premier plan P1 ainsi qu'au moins un deuxième point de fixation 58 positionné dans un deuxième plan P2 décalé selon la direction longitudinale par rapport au premier plan P1, les premier et deuxième points de fixation 56, 58 étant positionnés sur le système de transmission 36 et/ou la structure de connexion 44. Pour une plus grande stabilité et une meilleure reprise des efforts, les premier et deuxième plans P1, P2 sont les plus écartés possible.

Selon une configuration visible sur la figure 12, le premier plan P1 est positionné au droit du système de transmission 36. Le deuxième plan P2 est positionné au droit de la structure de connexion 44, notamment au droit de la deuxième extrémité du tube 48.

Selon une configuration visible sur les figures 5 à 7, les premier et deuxième plans P1, P2 sont positionnés au droit de la structure de connexion 44, le premier plan P1 étant situé au droit de la première extrémité 48.1 du tube 48, le deuxième plan P2 étant situé au droit de la deuxième extrémité 48.2 du tube 48. Selon cette configuration, les efforts générés par l'hélice 32 et transmis à la structure support de l'aéronef ne transitent pas par le système de transmission 36 qui est un élément sensible concernant les risques en matière de feu. Dans ce cas, le système de transmission 36 et plus particulièrement son boîtier 40 ne sont pas structurels.

Selon un mode de réalisation, la structure d'attache 54 comprend un cadre 60 positionné dans un plan transversal, approximativement au droit de la première extrémité 48.1 du tube 48 de la structure de connexion 44, plusieurs bielles obliques 62.1 à 62.4 présentant une première extrémité reliée par une première liaison 64 au cadre 60 et une deuxième extrémité reliée par une deuxième liaison 66 à un des deuxièmes points de fixation 58 situés au niveau de la deuxième extrémité 48.2 du tube 48 de la structure de connexion 44 ainsi qu'au moins deux bielles transversales 68 reliant chacune le cadre 60 à au moins un premier point de fixation 56 situé au niveau de la première extrémité 48.1 du tube 48 de la structure de connexion 44.

Selon une configuration, les bielles obliques 62.1 à 62.4 sont régulièrement réparties autour de la structure de connexion 44. Selon un agencement visible sur les figures 6 et 7, la structure d'attache 54 comprend quatre bielles obliques 62.1 à 62.4 situées approximativement dans un plan vertical passant par l'axe de rotation A32 et dans un plan horizontal passant par l'axe de rotation A32.

Pour chaque bielle oblique 62.1 à 62.4, chacune des première et deuxième liaisons 64, 66 comprend une articulation présentant un axe de pivotement A64, A66 positionné dans un plan transversal et sensiblement perpendiculaire à l'orientation de la bielle oblique 62.1 à 62.4 correspondante (l'orientation correspondant à la direction passant par les première et deuxième extrémités de la bielle oblique correspondante). Selon un mode de réalisation visible sur les figures 8 et 10, pour chaque deuxième liaison 66, la structure de connexion 44 comprend une chape rapportée sur la surface extérieure du tube 48 présentant deux ailes entre lesquelles est positionnée la deuxième extrémité de la bielle oblique 62.1 à 62.4. En complément, pour chaque première liaison 64, le cadre 60 comprend une chape présentant deux ailes entre lesquelles est positionnée la première extrémité de la bielle oblique 62.1 à 62.4.

Selon une configuration visible sur la figure 8, la structure d'attache 54 comprend deux bielles transversales 68, 68' positionnées de part et d'autre d'un plan vertical passant par l'axe de rotation A32 ainsi que, pour chaque bielle transversale 68, 68', au moins une première articulation 70 reliant la bielle transversale 68, 68' et le cadre 60, au moins une deuxième articulation 72 reliant la bielle transversale 68, 68' et la structure de connexion 44.

Chacune des première et deuxième articulations 70, 72 présente un axe de pivotement sensiblement parallèle à l'axe de rotation A32.

Selon un mode de réalisation, la structure de connexion 44 comprend une platine 74, positionnée au niveau de la première extrémité 48.1 du tube 48 (à la place de la première collerette 50.1 ou juxtaposée à cette dernière), qui présente dans un plan transversal une forme approximativement triangulaire avec des sommets arrondis, le tube 48 étant positionné à proximité d'un premier sommet 74.1, les deuxième et troisième sommets 74.2, 74.3 étant reliés par un côté opposé au premier sommet 74.1 sensiblement horizontal, situé au-dessus du tube 48 et à proximité du cadre 60, les bielles transversales 68, 68' étant reliées à la platine 74 au niveau des deuxième et troisième sommets arrondis 74.2, 74.3. Cette platine 74 présente au moins un orifice traversant 76 pour l'arbre de sortie 34.1 de chaque moteur électrique 34 positionné à l'avant du système de transmission 36.

Selon une configuration, la structure d'attache 54 comprend une première bielle transversale 68 reliée au cadre 60 par une unique première articulation 70 et à la structure de connexion 44 par une unique deuxième articulation 72 ainsi qu'une deuxième bielle transversale 68' reliée au cadre 60 par deux premières articulations 70, 70' et à la structure de connexion 44 par une unique articulation 72. Selon cette configuration, la platine 74 comprend des première et deuxième extensions 78, au niveau de chacun des deuxième et troisième sommets 74.2, 74.3, une première extension pour la deuxième articulation 72 de la première bielle transversale 68, une autre pour la deuxième articulation 72 de la deuxième bielle transversale 68'.

En variante, la deuxième bielle transversale 68' pourrait être reliée au cadre 60 par une unique première articulation 70 et à la structure de connexion 44 par deux deuxièmes articulations 72.

Selon un mode de réalisation visible sur la figure 10, au moins une des deuxièmes articulations 72 comprend une chape solidaire de la structure de connexion 44 qui présente deux ailes entre lesquelles est positionnée une bielle transversale 68, 68'. Selon un autre mode de réalisation visible sur la figure 11, au moins une des deuxièmes articulations 72 comprend une chape solidaire de la bielle transversale 68, 68' correspondante qui présente deux ailes entre lesquelles est positionnée la platine 74. En variante, au moins une bielle transversale 68, 68' comprend deux plaques parallèles, faiblement espacées et disposées de part et d'autre de la platine 74

Bien entendu, l'invention n'est pas limitée à ce mode de réalisation pour la structure d'attache 54. Ainsi, comme illustré sur la figure 12, les bielles transversales 68, 68' reliant le cadre 60 et le boîtier 40 peuvent être remplacées par des éléments de liaison déformables 80 de type « silent bloc » par exemple.

## Revendications

1. Ensemble de propulsion d'un aéronef comprenant une hélice (32) qui présente un axe de rotation (A32), plusieurs moteurs électriques (34), un système de transmission (36) configuré pour accoupler les moteurs électriques (34) à l'hélice (32) et comportant un arbre de sortie (42) relié à l'hélice (32) ainsi qu'un système de réglage du pas d'hélice (38), le système de transmission (36) délimitant une zone avant dans laquelle est positionnée l'hélice (32) ainsi qu'une zone arrière opposée à la zone avant, le système de réglage du pas d'hélice (38) étant positionné dans la zone arrière, **caractérisé en ce qu'**au moins un des moteurs électriques (34) est positionné dans la zone avant et **en ce que** l'ensemble de propulsion comprend une structure de connexion (44) intercalée entre l'hélice (32) et le système de transmission (36), la structure de connexion (44) et l'arbre de sortie (42) du système de transmission (36) relié à l'hélice (32) étant configurés de manière à ce qu'aucun moteur électrique (34) positionné dans la zone avant n'interfère avec l'hélice (32).

2. Ensemble de propulsion selon la revendication 1, **caractérisé en ce que** l'ensemble de propulsion comprend un système de guidage (46) intercalé entre la structure de connexion (44) et l'arbre de sortie (42) du système de transmission (36) relié à l'hélice (20).

3. Ensemble de propulsion selon l'une des revendications précédentes, **caractérisé en ce que** la structure de connexion (44) comprend un tube (48) s'étendant entre des première et deuxième extrémités (48.1, 48.2), la première extrémité (48.1) étant reliée au système de transmission (36).

4. Ensemble de propulsion selon l'une des revendications précédentes, **caractérisé en ce que** l'ensemble de propulsion comprend au moins une structure d'attache (54) configurée pour relier l'ensemble de propulsion à une structure support d'un aéronef, comportant au moins un premier point de fixation (56) positionné dans un premier plan (P1) ainsi qu'au moins un deuxième point de fixation (58) positionné dans un deuxième plan (P2) décalé selon une direction parallèle à l'axe de rotation (A32) par rapport au premier plan (P1), les premier et deuxième points de fixation (56, 58) étant positionnés sur le système de transmission (36) et/ou la structure de connexion (44).

5. Ensemble de propulsion selon les revendications 3 et 4, **caractérisé en ce que** les premier et deuxième plans (P1, P2) sont positionnés au droit de la structure de connexion (44), le premier plan (P1) étant situé au droit de la première extrémité (48.1) du tube (48), le deuxième plan (P2) étant situé au droit de la deuxième extrémité (48.2) du tube (48).

6. Ensemble de propulsion selon la revendication précédente, **caractérisé en ce que** la structure d'attache (54) comprend un cadre (60) positionné dans un plan transversal, plusieurs bielles obliques (62.1 à 62.4) présentant une première extrémité reliée par une première liaison (64) au cadre (60) et une deuxième extrémité reliée par une deuxième liaison (66) à un des deuxièmes points de fixation (58) situés au niveau de la deuxième extrémité (48.2) du tube (48) de la structure de connexion (44) ainsi qu'au moins deux bielles transversales (68) reliant chacune le cadre (60) à au moins un premier point de fixation (56) situé au niveau de la première extrémité (48.1) du tube (48) de la structure de connexion (44).

7. Ensemble de propulsion selon la revendication précédente, **caractérisé en ce que** chaque bielle oblique (62.1 à 62.4) présente une orientation et **en ce que**, pour chaque bielle oblique (62.1 à 62.4), chacune des première et deuxième liaisons (64, 66) comprend une articulation présentant un axe de pivotement (A64, A66) positionné dans un plan transversal et sensiblement perpendiculaire à l'orientation de la bielle oblique (62.1 à 62.4) correspondante.

8. Ensemble de propulsion selon l'une des revendications 6 à 7, **caractérisé en ce que** la structure d'attache (54) comprend :
- deux bielles transversales (68, 68') positionnées de part et d'autre d'un plan vertical passant par l'axe de rotation (A32),
- pour chaque bielle transversale (68, 68'), au moins une première articulation (70) reliant la bielle transversale (68, 68') et le cadre (60), ainsi qu'au moins une deuxième articulation (72) reliant la bielle transversale (68, 68') et la structure de connexion (44),
- chacune des première et deuxième articulations (70, 72) présentant un axe de pivotement sensiblement parallèle à l'axe de rotation (A32).

9. Ensemble de propulsion selon l'une des revendications 6 à 8, **caractérisé en ce que** la structure de connexion (44) comprend une platine (74), positionnée au niveau de la première extrémité (48.1) du tube (48), qui présente dans un plan transversal une forme approximativement triangulaire avec des premier, deuxième et troisième sommets arrondis, le tube (48) étant positionné à proximité du premier sommet (74.1), les deuxième et troisième sommets (74.2, 74.3) étant reliés par un côté opposé au premier sommet (74.1) sensiblement horizontal, situé au-dessus du tube (48) et à proximité du cadre (60), les bielles transversales (68, 68') étant reliées à la platine (74) au niveau des deuxième et troisième sommets arrondis (74.2, 74.3).

10. Aéronef comprenant au moins un ensemble de propulsion selon l'une des revendications précédentes.

## Patentansprüche

1. Antriebseinheit eines Luftfahrzeugs mit einem Propeller (32), der eine Drehachse (A32) aufweist, mit mehreren Elektromotoren (34), mit einem Übertragungssystem (36), das so eingerichtet ist, dass es die Elektromotoren (34) mit dem Propeller (32) koppelt, und das eine mit dem Propeller (32) verbundene Abtriebswelle (42) aufweist, sowie mit einem System zur Einstellung der Propellersteigung (38), wobei das Übertragungssystem (36) einen vorderen Bereich, in dem der Propeller (32) angeordnet ist, sowie einen hinteren Bereich begrenzt, der dem vorderen Bereich gegenüberliegt, und wobei das System zur Einstellung der Propellersteigung (38) in dem hinteren Bereich angeordnet ist, **dadurch gekennzeichnet, dass** wenigstens einer der Elektromotoren (34) in dem vorderen Bereich angeordnet ist und dass die Antriebseinheit eine Verbindungsstruktur (44) aufweist, die zwischen dem Propeller (32) und dem Übertragungssystem (36) eingefügt ist, wobei die Verbindungsstruktur (44) und die mit dem Propeller (32) verbundene Abtriebswelle (42) des Übertragungssystems (36) so eingerichtet sind, dass kein im vorderen Bereich angeordneter Elektromotor (34) mit dem Propeller (32) interferiert.

2. Antriebseinheit nach Anspruch 1, **dadurch gekennzeichnet, dass** die Antriebseinheit ein Führungssystem (46) aufweist, das zwischen der Verbindungsstruktur (44) und der Abtriebswelle (42) des mit dem Propeller (20) verbundenen Übertragungssystems (36) angeordnet ist.

3. Antriebseinheit nach einem der vorhergehenden Ansprüche, **dadurch gekennzeichnet, dass** die Verbindungsstruktur (44) ein Rohr (48) umfasst, das sich zwischen einem ersten und einem zweiten Ende (48.1, 48.2) erstreckt, wobei das erste Ende (48.1) mit dem Übertragungssystem (36) verbunden ist.

4. Antriebseinheit nach einem der vorhergehenden Ansprüche, **dadurch gekennzeichnet, dass** die Antriebseinheit wenigstens eine Befestigungsstruktur (54) aufweist, die so eingerichtet ist, dass sie die Antriebseinheit mit einer Tragstruktur eines Luftfahrzeugs verbindet, und die wenigstens einen ersten Befestigungspunkt (56), der in einer ersten Ebene (P1) angeordnet ist, sowie wenigstens einen zweiten Befestigungspunkt (58) aufweist, der in einer zweiten Ebene (P2) angeordnet ist, die in eine Richtung parallel zur Drehachse (A32) in Bezug auf die erste Ebene (P1) versetzt ist, wobei der erste und der zweite Befestigungspunkt (56, 58) an dem Übertragungssystem (36) und/oder der Verbindungsstruktur (44) angeordnet sind.

5. Antriebseinheit nach Anspruch 3 und 4, **dadurch gekennzeichnet, dass** die erste und zweite Ebene (P1, P2) an der Verbindungsstruktur (44) angeordnet sind, wobei die erste Ebene (P1) an dem ersten Ende (48.1) des Rohrs (48) und die zweite Ebene (P2) an dem zweiten Ende (48.2) des Rohrs (48) angeordnet ist.

6. Antriebseinheit nach dem vorhergehenden Anspruch, **dadurch gekennzeichnet, dass** die Befestigungsstruktur (54) einen in einer Querebene angeordneten Rahmen (60), mehrere schräge Verbindungsstangen (62.1 bis 62.4) mit einem ersten Ende, das über eine erste Verbindung (64) mit dem Rahmen (60) verbunden ist, und mit einem zweiten Ende, das über eine zweite Verbindung (66) mit einem der zweiten Befestigungspunkte (58) verbunden ist, die sich auf im Bereich des zweiten Endes (48.2) des Rohrs (48) der Verbindungsstruktur (44) befinden, sowie wenigstens zwei Querverbindungsstangen (68) aufweist, die jeweils den Rahmen (60) mit wenigstens einem ersten Befestigungspunkt (56) verbinden, der sich im Bereich des ersten Endes (48.1) des Rohrs (48) der Verbindungsstruktur (44) befindet.

7. Antriebseinheit nach dem vorhergehenden Anspruch, **dadurch gekennzeichnet, dass** jede schräge Verbindungsstange (62.1 bis 62.4) eine Ausrichtung aufweist und dass bei jeder schrägen Verbindungsstange (62.1 bis 62.4) jede der ersten und zweiten Verbindungen (64, 66) ein Gelenk mit einer Schwenkachse (A64, A66) aufweist, die in einer zur Ausrichtung der entsprechenden schrägen Verbindungsstange (62.1 bis 62.4) rechtwinkligen Querebene angeordnet ist.

8. Antriebseinheit nach einem der Ansprüche 6 bis 7, **dadurch gekennzeichnet, dass** die Befestigungsstruktur (54) umfasst:
- zwei Querstangen (68, 68'), die auf beiden Seiten einer vertikalen Ebene angeordnet sind, die durch die Drehachse (A32) verläuft,
- für jede Querstange (68, 68') wenigstens ein erstes Gelenk (70), das die Querstange (68, 68') und den Rahmen (60) verbindet, sowie wenigstens ein zweites Gelenk (72), das die Querstange (68, 68') und die Verbindungsstruktur (44) verbindet,
- wobei jedes der ersten und zweiten Gelenke (70, 72) eine Schwenkachse aufweist, die im Wesentlichen parallel zur Drehachse (A32) verläuft.

9. Antriebseinheit nach einem der Ansprüche 6 bis 8, **dadurch gekennzeichnet, dass** die Verbindungsstruktur (44) eine Platte (74) aufweist, die am ersten Ende (48.1) des Rohrs (48) angeordnet ist und die in einer Querebene eine annähernd dreieckige Form mit abgerundeten ersten, zweiten und dritten Spitzen aufweist, wobei das Rohr (48) in der Nähe des ersten Spitze (74.1) angeordnet ist und wobei die zweite und dritte Spitze (74.2, 74.3) durch eine der ersten Spitze (74.1) gegenüberliegende im Wesentlichen horizontalen Seite verbunden sind, die sich über dem Rohr (48) und in der Nähe des Rahmens (60) befindet, wobei die Querstangen (68, 68') an der zweiten und dritten abgerundeten Spitze (74.2, 74.3) mit der Platte (74) verbunden sind.

10. Luftfahrzeug mit wenigstens einer Antriebseinheit nach einem der vorhergehenden Ansprüche.

## Claims

1. Aircraft propulsion assembly comprising a propeller (32) having an axis of rotation (A32), a plurality of electric motors (34), a transmission system (36) configured to couple the electric motors (34) to the propeller (32) and comprising an output shaft (42) connected to the propeller (32), and a propeller pitch adjustment system (38), the transmission system (36) delimiting a front zone in which the propeller (32) is positioned, and a rear zone opposite the front zone, the propeller pitch adjustment system (38) being positioned in the rear zone, **characterized in that** at least one of the electric motors (34) is positioned in the front zone, and **in that** the propulsion assembly comprises a connection structure (44) interposed between the propeller (32) and the transmission system (36), the connection structure (44) and the output shaft (42) of the transmission system (36) connected to the propeller (32) being configured in such a way that no electric motor (34) positioned in the front zone interferes with the propeller (32).

2. Propulsion assembly as claimed in claim 1, wherein the propulsion assembly comprises a guide system (46) interposed between the connection structure (44) and the output shaft (42) of the transmission system (36) connected to the propeller (20).

3. Propulsion assembly as claimed in one of the preceding claims, wherein the connection structure (44) comprises a tube (48) extending between first and second ends (48.1, 48.2), the first end (48.1) being connected to the transmission system (36).

4. Propulsion assembly as claimed in one of the preceding claims, wherein the propulsion assembly comprises at least one attachment structure (54) configured to connect the propulsion assembly to a support structure of an aircraft, comprising at least one first attachment point (56) positioned in a first plane (P1) and at least one second attachment point (58) positioned in a second plane (P2) offset from the first plane (P1) in a direction parallel to the axis of rotation (A32), the first and second attachment points (56, 58) being positioned on the transmission system (36) and/or the connection structure (44).

5. Propulsion assembly as claimed in claims 3 and 4, wherein the first and second planes (P1, P2) are positioned in line with the connection structure (44), the first plane (P1) being located in line with the first end (48.1) of the tube (48), the second plane (P2) being located in line with the second end (48.2) of the tube (48).

6. Propulsion assembly as claimed in the preceding claim, wherein the attachment structure (54) comprises a frame (60) positioned in a transverse plane, a plurality of oblique connecting rods (62.1 to 62.4) having a first end connected by a first link (64) to the frame (60) and a second end connected by a second link (66) to one of the second attachment points (58) located at the second end (48.2) of the tube (48) of the connection structure (44), and at least two transverse connecting rods (68) each connecting the frame (60) to at least one first attachment point (56) located at the first end (48.1) of the tube (48) of the connection structure (44).

7. Propulsion assembly as claimed in the preceding claim, wherein each oblique connecting rod (62.1 to 62.4) has an orientation, and in that, for each oblique connecting rod (62.1 to 62.4), each of the first and second links (64, 66) comprises a joint having a pivot axis (A64, A66) positioned in a transverse plane and substantially perpendicular to the orientation of the corresponding oblique connecting rod (62.1 to 62.4).

8. Propulsion assembly as claimed in one of claims 6 to 7, wherein the attachment structure (54) comprises :
- two transverse connecting rods (68, 68') positioned on either side of a vertical plane passing through the axis of rotation (A32),
- for each transverse connecting rod (68, 68'), at least one first joint (70) connecting the transverse connecting rod (68, 68') and the frame (60), and at least one second joint (72) connecting the transverse connecting rod (68, 68') and the connection structure (44),
- each of the first and second joints (70, 72) having a pivot axis substantially parallel to the axis of rotation (A32).

9. Propulsion assembly as claimed in one of claims 6 to 8, wherein the connection structure (44) comprises a plate (74), positioned at the first end (48.1) of the tube (48), which plate has, in a transverse plane, an approximately triangular shape with first, second and third rounded vertices, the tube (48) being positioned close to the first vertex (74.1), the second and third vertices (74.2, 74.3) being connected by a side opposite the first substantially horizontal vertex (74.1), located above the tube (48) and close to the frame (60), the transverse connecting rods (68, 68') being connected to the plate (74) at the second and third rounded vertices (74.2, 74.3).

10. Aircraft comprising at least one propulsion assembly as claimed in one of the preceding claims.
